# EUROPEAN PATENT APPLICATION

(11) **EP 4 391 714 A1**
(43) Date of publication of application: **26.06.2024**
(21) Application number: 21964416.8
(22) Date of filing: 19.11.2021
(51) Int. Cl.: H04W 88/04, H04W 76/10

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: GUO, Yali, Dongguan, Guangdong 523860 (CN); LU, Fei, Dongguan, Guangdong 523860 (CN)
(74) Representative: Grassi, Stefano
(86) International application number: PCT/CN2021/131848
(87) International publication number: WO 2023/087262

(57) **Abstract**

Provided are a communication method and a communication apparatus. The method includes the following operations: a first terminal device receives first information from a second terminal device, where the first information includes an application layer identification and/or a link layer identification of a third terminal device; and the first terminal device determines, based on the first information, a communication link between the first terminal device and the third terminal device, where the communication link is used to provide a communication relay between the second terminal device and the third terminal device. By means of the method provided in the invention, the communication efficiency of terminal devices can be improved.

## Description

### TECHNICAL FIELD

The present disclosure relates to a technical field of communication, and more particularly to a communication method and a communication apparatus.

### BACKGROUND

With the development of communication technologies, some communication systems introduce relay communication between user equipments (UEs) to allow for communication between two UEs through a relay UE when the two UEs are far apart. However, currently, there may be a problem that the relay communication cannot be performed through the relay UE. Therefore, how to perform the relay communication through the relay UE has become an urgent technical problem to be solved.

### SUMMARY

The present disclosure provides a communication method and a communication apparatus, which can improve the communication efficiency of terminal devices.

According to a first aspect, a communication method is provided. The communication method includes the following operations. A first terminal device receives first information from a second terminal device. Herein, the first information includes an application layer identification and/or a link layer identification of a third terminal device. The first terminal device determines, based on the first information, a communication link between the first terminal device and the third terminal device. Herein, the communication link is configured to provide a communication relay between the second terminal device and the third terminal device.

According to a second aspect, a communication method is provided. The communication method includes the following operation. A second terminal device sends first information to a first terminal device. Herein, the first information includes an application layer identification and/or a link layer identification of a third terminal device.

According to a third aspect, a communication method is provided. The communication method includes the following operation. A third terminal device receives unicast signaling from a first terminal device. Herein, the unicast signaling is used to determine a communication link between the first terminal device and the third terminal device.

According to a fourth aspect, a communication apparatus is provided. The communication apparatus includes a receiving unit and a determination unit. The receiving unit is configured to receive first information from a second terminal device. Herein, the first information includes an application layer identification and/or a link layer identification of a third terminal device. The determination unit is configured to determine, based on the first information, a communication link between the apparatus and the third terminal device. Herein, the communication link is used to provide a communication relay between the second terminal device and the third terminal device

According to a fifth aspect, a communication apparatus is provided. The communication apparatus includes a sending unit. The sending unit is configured to send first information to a first terminal device. Herein, the first information includes an application layer identification and/or a link layer identification of a third terminal device.

According to a sixth aspect, a communication apparatus is provided. The communication apparatus includes a receiving unit. The receiving unit is configured to receive unicast signaling from a first terminal device. Herein, the unicast signaling is used to determine a communication link between the first terminal device and the apparatus.

According to a seventh aspect, a communication apparatus is provided. The communication apparatus includes a memory and a processor, the memory is configured to store a program, and the processor is configured to call and run the program in the memory, to implement the method from any one of the first aspect to the third aspect.

According to an eighth aspect, a communication apparatus is provided. The communication apparatus includes a processor, and the processor is configured to call and run a program from a memory, to implement the method from any one of the first aspect to the third aspect.

According to a ninth aspect, a chip is provided. The chip includes a processor, and the processor is configured to call and run a program from a memory, to enable a device installed with the chip to implement the method from any one of the first aspect to the third aspect.

According to a tenth aspect, a computer-readable storage medium having stored thereon a program is provided. The program, when executed by a computer, enables the computer to implement the method from any one of the first aspect to the third aspect.

According to an eleventh aspect, a computer program product is provided. The computer program product includes a program, which enables a computer to implement the method from any one of the first aspect to the third aspect.

According to a twelfth aspect, a computer program is provided. The computer program enables a computer to implement the method from any one of the first aspect to the third aspect.

In the embodiments of the present disclosure, the first terminal device determines, based on the first information, the communication link between the first terminal device and the third terminal device, and thus, the communication relay between the second terminal device and the third terminal device is provided through the communication link, which can improve the communication efficiency of the terminal devices.

### BRIEF DESCRIPTION OF THE DRAWINGS

FIG. 1 is a schematic diagram of a wireless communication system to which the embodiments of the present disclosure are applied.
FIG. 2 is a schematic diagram of relay communication between terminal devices.
FIG. 3 is a schematic flowchart of an establishment of a communication connection between terminal devices.
FIG. 4 is a schematic flowchart of a communication method according to an embodiment of the present disclosure.
FIG. 5 is a schematic flowchart of a communication method according to another embodiment of the present disclosure.
FIG. 6 is a schematic structural diagram of a communication apparatus according to an embodiment of the present disclosure.
FIG. 7 is a schematic structural diagram of a communication apparatus according to another embodiment of the present disclosure.
FIG. 8 is a schematic structural diagram of a communication apparatus according to yet another embodiment of the present disclosure.
FIG. 9 is a schematic structural diagram of an apparatus according to an embodiment of the present disclosure.

### DETAILED DESCRIPTION

The technical solutions in the present disclosure will be described in combination with the drawings.

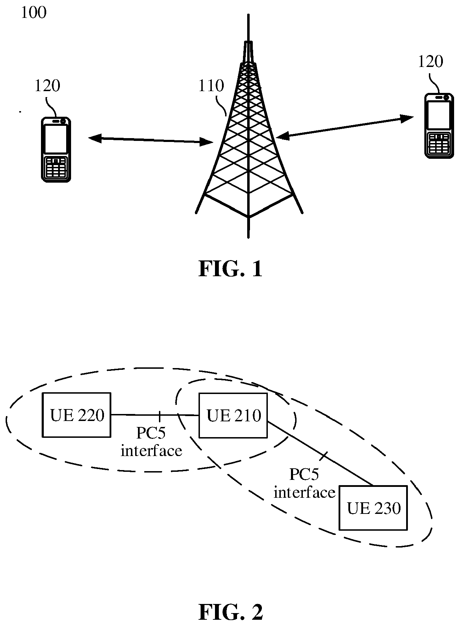

FIG. 1 illustrates a wireless communication system 100 to which the embodiments of the present disclosure are applied. The wireless communication system 100 may include a network device 110 and a user equipment (UE) 120. The network device 110 may communicate with the UE 120. The network device 110 may provide communication coverage for a specific geographical region and may communicate with a UE 120 in the coverage. The UE 120 may access a network (such as, a wireless network) through the network device 110.

One network device and two UEs are exemplarily shown in FIG. 1. In an embodiment, the wireless communication system 100 may include multiple network devices, and another number of terminal devices may be included in coverage of each network device, which is not limited in the embodiments of the present disclosure. In an embodiment, the wireless communication system 100 may further include another network entity such as a network controller and a mobility management entity, which is not limited in the embodiments of the present disclosure.

It should be understood that the technical solutions of the embodiments of the present disclosure may be applied to various communication systems, for example, a 5th generation (5G) system or a New Radio (NR), a Long Term Evolution (LTE) system, an LTE Frequency Division Duplex (FDD) system, an LTE Time Division Duplex (TDD) system, etc. The technical solutions provided in the present disclosure may further be applied to future communication systems, such as a 6th generation (6G) mobile communication system, a satellite communication system, etc.

The UE in the embodiments of the present disclosure may be referred to as a terminal device, an access terminal, a user unit, a user station, a mobile site, a mobile station (MS), a mobile terminal (MT), a remote station, a remote terminal, a mobile device, a user terminal, a terminal, a wireless communication device, a user agent or a user apparatus. The UE in the embodiments of the present disclosure may be a device that provides voice and/or data connectivity to the user, and may be configured to connect people, objects and machines. For example, the UE may be a handheld device with a wireless connection function, a vehicle-mounted device with the wireless connection function, etc. The UE in the embodiments of the present disclosure may be a mobile phone, a pad, a laptop computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, etc. In an embodiment, the UE may be configured to act as a base station. For example, the UE may act as a scheduling entity that provides a sidelink signal between UEs in a vehicle to everything (V2X) or a device to device (D2D), etc. For example, a cellular phone and a vehicle may use the sidelink signal to communicate with each other. The cellular phone and a smart home device may communicate with each other without relaying a communication signal through a base station.

The network device in the embodiments of the present disclosure may be a device that is configured to communicate with the UE, and the network device may also be referred to as an access network device or a wireless access network device, such as a base station. The network device in the embodiments of the present disclosure may be a radio access network (RAN) node (or device) that enables the UE to access to a wireless network. The base station may be broadly overridden by, or replaced with, the following names, such as: a Node B (NodeB), an evolved NodeB (eNB), a next generation NodeB (gNB), a relay station, an access point, a transmitting and receiving point (TRP), a transmitting point (TP), a primary MeNB, a secondary SeNB, a multi-standard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node or analogue, or a combination thereof. For ease of understanding, the network device may also be referred to as the base station below.

In some embodiments, the base station may be fixed or mobile. For example, a helicopter or drone may be configured to act as a mobile base station, and one or more cells may move based on a location of the mobile base station. In another example, the helicopter or drone may be configured to act as a device that communicates with another base station. In some embodiments, the base station may be the CU or the DU, or the base station may include the CU and the DU, or the base station may further include the AAU.

It should be understood that the base station may be deployed on land, and the base station includes the device being indoor or outdoor, handheld or vehicle-mounted. The base station may also be deployed on water. The base station may further be deployed on an airplane, a balloon and a satellite in the air. The base station and the scene in which the base station is located are not limited in the embodiments of the present disclosure. It should also be understood that all or part of the functions of the base station and the UE in the present disclosure may also be implemented by a software function that runs on hardware or by a virtualization function instantiated on a platform (e.g., a cloud platform).

The communication between the UEs may be performed through a sidelink. The sidelink communication may also be referred to as Proximity-based Services (Prose) communication, unilateral communication, side link communication, or D2D communication. For example, one UE with a Prose capability may communicate directly with another UE with the Prose capability through a PC5 interface.

When two UEs with the Prose capability are far apart and cannot directly establish a communication connection through the PC5 interface, a Relay UE with the Prose capability can be used for communication transfer. As illustrated in FIG. 2, a UE 210 may communicate directly with a UE 220 through a PC5 interface, and may also communicate directly with a UE 230 through the PC5 interface. At the moment, if the distance between the UE 220 and the UE 230 is too far to establish the communication connection directly through the PC5 interface, the UE 210 may provide a communication relay for the UE 220 and the UE 230, that is, the UE 220 and the UE 230 may communicate through the UE 210.

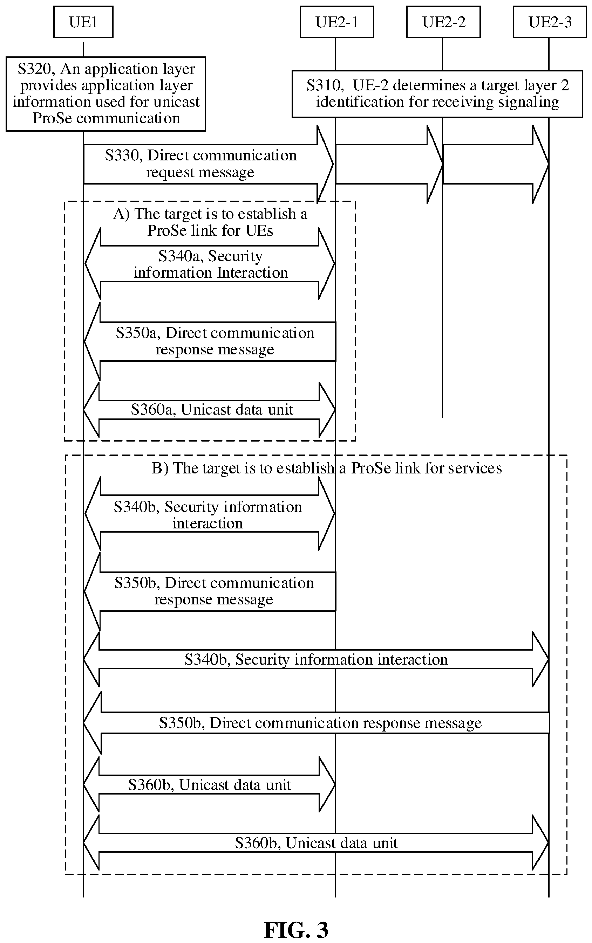

The communication connection between the UEs may be established by a method illustrated in FIG. 3. As illustrated in FIG. 3, the method may include the following operations.

At S310, a UE-2 determines a target layer 2 (Layer-2) identification (ID) for receiving signaling.

At S320, an application layer of a UE-1 provides application layer information used for unicast proximity-based services (ProSe) communication.

At S330, the UE-1 sends a direct communication request message to the UE-2 in a broadcast or a unicast manner.

At the moment, based on different targets, the ProSe link may be established through the following two modes, i.e., a mode A and a mode B.

In the mode A, the target is to establish a ProSe link for UEs.

At S340a, security information interaction between the UE-1 and the UE2-1 is performed.

At S350a, the UE2-1 sends a direct communication response message to the UE-1 in the unicast manner.

At S360a, a unicast data unit is transmitted between the UE-1 and the UE2-1.

In the mode B, the target is to establish a ProSe link for services.

At S340b, the security information interaction between the UE-1 and the UE2-1, and between the UE-1 and a UE2-3 is performed.

At S350b, the UE2-1 and the UE2-3 send the direct communication response message to the UE-1 in the unicast manner.

At S360b, the unicast data unit is transmitted between the UE-1 and the UE2-1, and between the UE-1 and the UE2-3.

It should be noted that the method for establishing the communication connection between the UEs illustrated in FIG. 3 is merely an example but not a limitation. In the embodiments of the present disclosure, the communication connection may also be established between the UEs by other methods, which are not limited in the present disclosure.

As illustrated in FIG. 2, a target link layer identification carried in the direct communication request message received by the UE 210 from the UE 220 is a link layer identification of the UE 210, and the UE 210 does not know an application layer identification or a link layer identification of the UE 230. Therefore, the UE 210 cannot directly send the direct communication request message to the UE 230 in the unicast manner, and the UE 210 can only send the direct communication request message in the broadcast manner, to request to establish the communication connection with the UE 230. At the moment, if the UE 230 does not listen to the broadcast, the communication connection with the UE 210 cannot be established, and the relay communication with the UE 220 through the UE 210 cannot be performed.

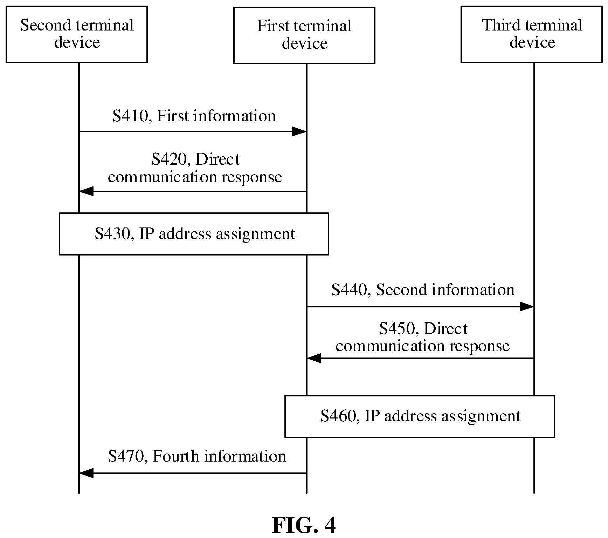

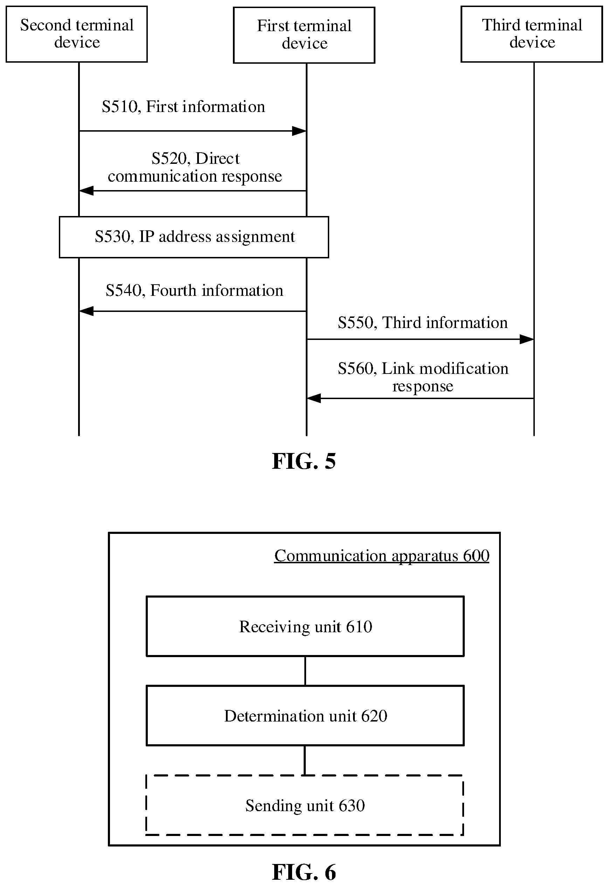

To solve one or more of the aforementioned problems, the embodiments of the present disclosure are illustrated in detail below in combination with the FIGS. 4 and 5.

FIG. 4 illustrates a schematic flowchart of a communication method according to an embodiment of the present disclosure. It should be understood that the method 400 illustrated in FIG. 4 includes the following operation S410.

At S410, a second terminal device sends first information to a first terminal device, so that the first terminal device provides a communication relay between the second terminal device and a third terminal device.

Each of the first terminal device, the second terminal device and the third terminal device may have a ProSe capability.

The first information includes an application layer identification and/or a link layer identification of the third terminal device. In an embodiment, based on the application layer identification and/or the link layer identification of the third terminal device, the first terminal device may directly send a direct communication request message to the third terminal device in a unicast manner, thereby providing the communication relay between the second terminal device and the third terminal device. In an embodiment, the link layer identification may be a layer 2 identification used for ProSe communication.

In some possible implementations, the second terminal device may send the first information to the first terminal device through a first direct communication request message. That is, the first information may be loaded or carried in the first direct communication request message. In an embodiment, the second terminal device may also send the first information to the first terminal device during security information interaction.

In an embodiment, the first direct communication request message may further include one or more of: an application layer identification of the second terminal device, an identification of the first terminal device, service information, or a relay service code.

At S420, the first terminal device sends a direct communication response message to the second terminal device.

In an embodiment, a link for the ProSe communication may be established between the first terminal device and the second terminal device, and the first terminal device may send the direct communication response message to the second terminal device. In an embodiment, the direct communication response message may include information such as the identification of the first terminal device, the relay service code, etc.

At S430, an Internet Protocol (IP) address is assigned between the first terminal device and the second terminal device.

In an embodiment, the first terminal device may assign the IP address to the second terminal device; or, the second terminal device may also assign the IP address to the first terminal device; or, the IP address may be assigned between the first terminal device and the second terminal device by other manners, which are not limited in the embodiments of the present disclosure.

After the S410, the first terminal device determines, based on the first information, a communication link between the first terminal device and the third terminal device. The communication link is used to provide the communication relay between the second terminal device and the third terminal device.

In the embodiments of the present disclosure, the first terminal device may determine the communication link between the first terminal device and the third terminal device in various manners. One implementation is described below in combination with S440 in FIG. 4, and another implementation is described subsequently in combination with S550 in FIG. 5.

In some possible implementations, after the S410, the method 400 may further include the following operation S440.

At S440, the first terminal device sends second information to the third terminal device.

The first terminal device may send the second information to the third terminal device, based on the application layer identification and/or the link layer identification of the third terminal device. In an embodiment, the second information may be used to request to establish the communication link between the first terminal device and the third terminal device.

In an embodiment, the first terminal device may send, based on the first information, the second information to the third terminal device in the unicast manner. In an embodiment, since the second information may be sent in the unicast manner, the second information may also be referred to as unicast signaling.

In some possible implementations, the first terminal device may send the second information to the third terminal device in the unicast manner through a second direct communication request message. That is, the second information may be loaded or carried in the second direct communication request message. For example, based on the first information (e.g., the application layer identification and/or the link layer identification of the third terminal device), the first terminal device may determine the third terminal device as a target terminal device, and further send the second information to the third terminal device in the unicast manner through the second direct communication request message.

In some possible implementations, the first terminal device may send the second information in the unicast manner by using the link layer identification of the third terminal device as a target link layer identification. For example, based on the first information (e.g., the link layer identification of the third terminal device), the first terminal device may determine a link layer of the third terminal device as a target link layer, and further send the second information to the link layer of the third terminal device in the unicast manner through the second direct communication request message.

In an embodiment, the first terminal device may further send an IP address and/or an application layer identification of the second terminal device to the third terminal device through the second information. That is, the IP address and/or the application layer identification of the second terminal device may be carried in the second information.

In an embodiment, the first terminal device may further send the IP address and/or the application layer identification of the second terminal device to the third terminal device during the security information interaction.

In some possible implementations, the second information may further include one or more of: an identification of the first terminal device, an application layer identification of the third terminal device, service information, and a relay service code.

In some possible implementations, the second direct communication request message may further include one or more of: an identification of the first terminal device, an application layer identification of the third terminal device, service information, and a relay service code.

At S450, the third terminal device sends a direct communication response message to the first terminal device.

In an embodiment, a link for the ProSe communication may be established between the third terminal device and the first terminal device, and the third terminal device may send the direct communication response message to the first terminal device. In an embodiment, the direct communication response message may include information such as an application layer identification of the first terminal device, a relay service code, etc.

At S460, an IP address is assigned between the first terminal device and the third terminal device.

In an embodiment, the first terminal device may assign the IP address to the third terminal device; or, the third terminal device may also assign the IP address to the first terminal device; or, the IP address may be assigned between the first terminal device and the third terminal device by other manners, which are not limited in the embodiments of the present disclosure.

The method 400 may further include the following operation S470.

At S470, the first terminal device sends fourth information to the second terminal device.

The fourth information may include an IP address of the third terminal device.

In some possible implementations, the first terminal device may send the fourth information to the second terminal device through the direct communication response message in the S420 (in such case, the S470 may not be required, or the S470 and S420 may be the same operation). In an embodiment, the first terminal device may also send the fourth information to the second terminal device through a second link modification request message. In an embodiment, the first terminal device may further send the fourth information to the second terminal device through other messages.

In the embodiment of the present disclosure, based on the application layer identification and/or the link layer identification of the third terminal device included in the first information, the first terminal device may establish the communication connection with the third terminal device, thereby providing the communication relay between the second terminal device and the third terminal device, and improving the communication efficiency of the terminal devices.

FIG. 5 illustrates a schematic flowchart of a communication method according to another embodiment of the present disclosure. It should be understood that the method 500 illustrated in FIG. 5 includes the following operation S510.

At S510, a second terminal device sends first information to a first terminal device, so that the first terminal device provides a communication relay between the second terminal device and a third terminal device.

Each of the first terminal device, the second terminal device and the third terminal device may have a ProSe capability.

The first information includes an application layer identification and/or a link layer identification of the third terminal device. In an embodiment, based on the application layer identification and/or the link layer identification of the third terminal device, the first terminal device may directly send a direct communication request message to the third terminal device in a unicast manner, thereby providing the communication relay between the second terminal device and the third terminal device. In an embodiment, the link layer identification may be a layer 2 identification used for proximity-based services (ProSe) communication.

In some possible implementations, the second terminal device may send the first information to the first terminal device through a first direct communication request message. That is, the first information may be loaded or carried in the first direct communication request message. In an embodiment, the second terminal device may also send the first information to the first terminal device during security information interaction.

In an embodiment, the first direct communication request message may further include one or more of: an application layer identification of the second terminal device, an identification of the first terminal device, service information, or a relay service code.

At S520, the first terminal device sends a direct communication response message to the second terminal device.

In an embodiment, a link for the ProSe communication may be established between the first terminal device and the second terminal device, and the first terminal device may send the direct communication response message to the second terminal device. In an embodiment, the direct communication response message may include information such as the identification of the first terminal device, the relay service code, etc.

At S530, an Internet Protocol (IP) address is assigned between the first terminal device and the second terminal device.

In an embodiment, the first terminal device may assign the IP address to the second terminal device; or, the second terminal device may also assign the IP address to the first terminal device; or, the IP address may be assigned between the first terminal device and the second terminal device by other manners, which are not limited in the embodiments of the present disclosure.

At S540, the first terminal device sends fourth information to the second terminal device.

The fourth information may include an IP address of the third terminal device.

In an embodiment, based on the first information (e.g., the application layer identification and/or the link layer identification of the third terminal device), the first terminal device may determine that the communication link between the first terminal device and the third terminal device has existed. Further, the first terminal device may determine the IP address of the third terminal device, and send the IP address of the third terminal device (i.e., the fourth information) to the second terminal device.

In some possible implementations, the first terminal device may send the fourth information to the second terminal device through the direct communication response message in the S520 (in such case, the S540 may not be required, or the S540 and S520 may be the same operation). In an embodiment, the first terminal device may also send the fourth information to the second terminal device through a second link modification request message. In an embodiment, the first terminal device may further send the fourth information to the second terminal device through other messages.

After the first terminal device determines, based on the first information, that the communication link between the first terminal device and the third terminal device has existed, the first terminal device may determine, based on the first information, the communication link between the first terminal device and the third terminal device. The communication link may be configured to provide the communication relay between the second terminal device and the third terminal device.

In the embodiments of the present disclosure, the first terminal device may determine the communication link between the first terminal device and the third terminal device in various manners. One implementation has been described in the foregoing embodiments in combination with the S440 in FIG. 4, and another implementation is described below in combination with S550 in FIG. 5.

In some possible implementations, after the S510, the method 500 may further include the following operation S550.

At S550, the first terminal device sends third information to the third terminal device.

The third information may be used to modify the communication link between the first terminal device and the third terminal device.

In an embodiment, the first terminal device may send the third information to the third terminal device in the unicast manner. In an embodiment, since the third information may be sent in the unicast manner, the third information may also be referred to as unicast signaling.

In an embodiment, the first terminal device may send the third information to the third terminal device through a first link modification request message. That is, the third information may be loaded or carried in the first link modification request message.

In some possible implementations, the third information may further include at least one of: an identification of the first terminal device, an application layer identification of the third terminal device, service information or a relay service code.

In some possible implementations, the first link modification request message may further include at least one of: an identification of the first terminal device, an application layer identification of the third terminal device, service information, and a relay service code.

In an embodiment, the first terminal device may further send an IP address and/or an application layer identification of the second terminal device to the third terminal device through the third information. In an embodiment, the first terminal device may further send the IP address and/or the application layer identification of the second terminal device to the third terminal device during security information interaction.

At S560, the third terminal device sends a link modification response message to the first terminal device.

In the embodiment of the present disclosure, based on the application layer identification and/or the link layer identification of the third terminal device included in the first information, the first terminal device may establish the communication connection with the third terminal device, thereby providing the communication relay between the second terminal device and the third terminal device, and improving the communication efficiency of the terminal devices.

The method embodiments of the present disclosure are described in detail above in combination with the FIGS. 1 to 5, and the apparatus embodiments of the present disclosure are described in detail below in combination with FIGS. 6 to 9. It should be understood that the description of the method embodiments corresponds to the description of the apparatus embodiments. Therefore, portions that are not described in detail may be referred to the foregoing method embodiments.

FIG. 6 illustrates a schematic structural diagram of a communication apparatus according to an embodiment of the present disclosure. The communication apparatus 600 in FIG. 6 includes a receiving unit 610.

The receiving unit 610 is configured to receive first information from a second terminal device. The first information includes an application layer identification and/or a link layer identification of a third terminal device.

A determination unit 620 is configured to determine, based on the first information, a communication link between the apparatus and the third terminal device. The communication link is used to provide a communication relay between the second terminal device and the third terminal device.

In an embodiment, the link layer identification is a layer 2 identification used for proximity-based services (ProSe) communication.

In an embodiment, the apparatus has a ProSe capability.

In an embodiment, the receiving unit 610 is specifically configured to receive the first information from the second terminal device through a first direct communication request message or during security information interaction.

In an embodiment, the first direct communication request message includes at least one of: an application layer identification of the second terminal device, an identification of the apparatus, service information or a relay service code.

In an embodiment, the apparatus further includes the determination unit 620, and the determination unit 620 unit is specifically configured to send, based on the first information, second information to the third terminal device in a unicast manner. The second information is used to request to establish the communication link between the apparatus and the third terminal device.

In an embodiment, the determination unit 620 is specifically configured to send the second information to the third terminal device in the unicast manner through a second direct communication request message.

In an embodiment, the determination unit 620 is specifically configured to send the second information in the unicast manner by using the link layer identification of the third terminal device as a target link layer identification.

In an embodiment, the determination unit 620 is further configured to send an IP address of the second terminal device to the third terminal device through the second information or during the security information interaction.

In an embodiment, the second information includes at least one of: an identification of the apparatus, the application layer identification of the third terminal device, service information or a relay service code.

In an embodiment, the determination unit 620 is specifically configured to determine, based on the first information, that the communication link between the apparatus and the third terminal device has existed.

In an embodiment, the apparatus further includes a sending unit 630, and the sending unit 630 is configured to send third information to the third terminal device. The third information is used to modify the communication link.

In an embodiment, the sending unit 630 is further configured to send an IP address of the second terminal device to the third terminal device through third information or during the security information interaction.

In an embodiment, the sending unit 630 is specifically configured to send the third information to the third terminal device through a first link modification request message.

In an embodiment, the third information includes at least one of: an identification of the apparatus, the application layer identification of the third terminal device, service information or a relay service code.

In an embodiment, the sending unit 630 is further configured to send fourth information to the second terminal device. The fourth information includes an IP address of the third terminal device.

In an embodiment, the sending unit 630 is specifically configured to send the fourth information to the second terminal device through a direct communication response message or a second link modification request message.

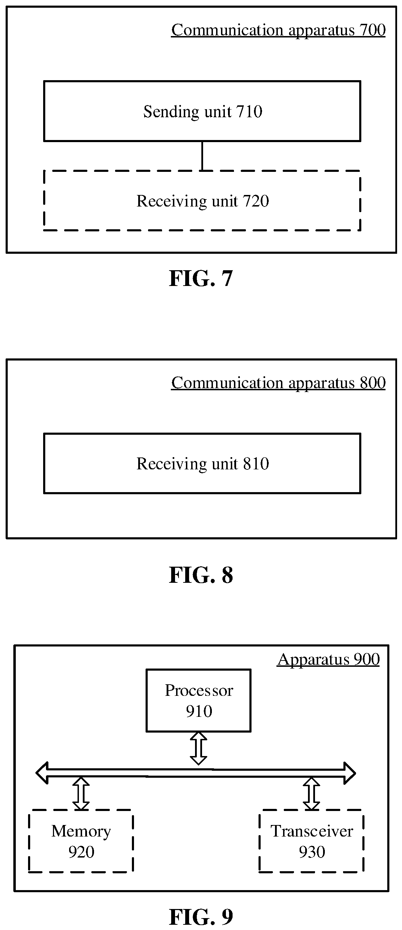

FIG. 7 illustrates a schematic structural diagram of a communication apparatus according to another embodiment of the present disclosure. The communication apparatus 700 in FIG. 7 includes a sending unit 710.

The sending unit 710 is configured to send first information to a first terminal device. The first information includes an application layer identification and/or a link layer identification of a third terminal device.

In an embodiment, the link layer identification is a layer 2 identification used for proximity-based services (ProSe) communication.

In an embodiment, the apparatus has a ProSe capability.

In an embodiment, the sending unit 710 is specifically configured to send the first information through a first direct communication request message or during security information interaction.

In an embodiment, the first direct communication request message includes at least one of: an application layer identification of the apparatus, an identification of the first terminal device, service information or a relay service code.

In an embodiment, the apparatus further includes a receiving unit 720, and the receiving unit 720 is configured to receive fourth information from the first terminal device. The fourth information includes an IP address of the third terminal device.

In an embodiment, the receiving unit 720 is specifically configured to receive the fourth information from the first terminal device through a direct communication response message or a second link modification request message.

FIG. 8 illustrates a schematic structural diagram of a communication apparatus according to yet another embodiment of the present disclosure. The communication apparatus 800 in FIG. 8 includes a receiving unit 810.

The receiving unit 810 is configured to receive unicast signaling from a first terminal device. The unicast signaling is used to determine a communication link between the first terminal device and the apparatus.

In an embodiment, the receiving unit 810 is specifically configured to receive second information sent by the first terminal device in a unicast manner. The second information is used to request to establish the communication link between the first terminal device and the apparatus.

In an embodiment, the receiving unit 810 is specifically configured to receive third information from the first terminal device. The third information is used to modify the communication link between the first terminal device and the apparatus.

In an embodiment, the receiving unit 810 is specifically configured to receive the second information sent by the first terminal device in the unicast manner through a second direct communication request message.

In an embodiment, the second information includes at least one of: an identification of the first terminal device, an application layer identification of the apparatus, service information or a relay service code.

In an embodiment, the receiving unit 810 is specifically configured to receive the third information from the first terminal device through a first link modification request message.

In an embodiment, the third information includes at least one of: an identification of the first terminal device, an application layer identification of the apparatus, service information or a relay service code.

In an embodiment, the receiving unit 810 is further configured to receive an IP address of a second terminal device from the first terminal device through the second information or the third information, or during security information interaction.

In an embodiment, the apparatus has a Prose capability.

FIG. 9 illustrates a schematic structural diagram of an apparatus according to an embodiment of the present disclosure. Blocks with dotted lines in FIG. 9 indicate that such units or modules are optional. The apparatus 900 may be configured to implement each of the methods described in the aforementioned method embodiments. The apparatus 900 may be a chip or a communication apparatus.

The apparatus 900 may include one or more processors 910. The processor 910 may support the apparatus 900 to implement each of the methods described in the aforementioned the method embodiments. The processor 910 may be a general-purpose processor or a special-purpose processor. For example, the processor may be a central processing unit (CPU). In an embodiment, the processor may also be another general-purpose processor, a digital signal processor (DSP), an application specific integrated circuit (ASIC), a field programmable gate array (FPGA), or another programmable logic device, discrete gate or transistor logic device, a discrete hardware component or the like. The general-purpose processor may be a microprocessor or the processor may be any conventional processor, etc.

The apparatus 900 may further include one or more memories 920. The memory 920 stores a program thereon, and the program may be executed by the processor 910 to enable the processor 910 to implement each of the methods described in the aforementioned method embodiments. The memory 920 may be independent of the processor 910, or the memory 920 may be integrated within the processor 910.

The apparatus 900 may also include a transceiver 930. The processor 910 may communicate with other devices or chips through the transceiver 930. For example, the processor 910 may send data to other devices or chips and receive data from other devices or chips through the transceiver 930.

The embodiments of the present disclosure further provide a computer-readable storage medium for storing a program. The computer-readable storage medium may be applied in the communication apparatus provided in the embodiments of the present disclosure. The program enables a computer to implement each of the methods performed by the communication apparatus in various embodiments of the present disclosure.

The embodiments of the present disclosure further provide a computer program product. The computer program product includes a program. The computer program product may be applied in the communication apparatus provided in the embodiments of the present disclosure. The program enables a computer to implement each of the methods performed by the communication apparatus in various embodiments of the present disclosure.

The embodiments of the present disclosure further provide a computer program. The computer program may be applied in the communication apparatus provided in the embodiments of the present disclosure. The computer program enables a computer to implement each of the methods performed by the communication apparatus in various embodiments of the present disclosure.

It should be understood that, in the embodiments of the present disclosure, "B corresponding to A" indicates that B is associated with A, and B may be determined from A. It should also be understood, however, that "determining B from A" does not mean determining B from A alone, but mean that B may also be determined from A and/or other information.

It should be understood that the term "and/or" herein only indicates an association relationship for describing associated objects and represents that there are three relationships. For example, A and/or B may represent three conditions: i.e., independent existence of A, existence of both A and B and independent existence of B. In addition, character "/" herein generally represents that previous and next associated objects form an "or" relationship.

It should be understood that, in the various embodiments of the present disclosure, the size of the sequence number of the aforementioned processes does not mean the sequence of execution. The sequence of execution of each of the processes should be determined by its function and inherent logic, and should not constitute any limitation on the implementation processes of the embodiments of the present disclosure.

In some embodiments provided by the present disclosure, it should be understood that the disclosed system, apparatus and method may be implemented in another manner. For example, the aforementioned apparatus embodiments are only schematic. For example, division of the units is only logic function division, and other division manners may be adopted during practical implementation. For example, multiple units or components may be combined or integrated into another system, or some characteristics may be neglected or not executed. In addition, coupling or direct coupling or communication connection between the displayed or discussed components may be indirect coupling or communication connection, implemented through some interfaces, of the apparatuses or the units, and may be electrical, mechanical or in other forms.

The units described as separate parts may or may not be physically separated, and parts displayed as units may or may not be physical units, that is, may be located in the same place, or may also be distributed to multiple network units. A part or all of the units may be selected to achieve the purpose of the solutions of the embodiments according to practical requirements.

In addition, functional units in each embodiment of the present disclosure may be integrated into a processing unit, each functional unit may also physically exist independently, and two or more than two functional units may also be integrated into a unit.

The aforementioned embodiments may be implemented in whole or in part by a software, a hardware, a firmware or any combination thereof. When being implemented in the software, the aforementioned embodiments may be implemented in whole or in part in the form of a computer program product. The computer program product includes one or more computer instructions. When the computer program instructions are loaded and executed on a computer, the processes or functions described in accordance with the embodiments of the present disclosure are generated in whole or in part. The computer may be a general-purpose computer, a special-purpose computer, a computer network, or another programmable device. The computer instructions may be stored in the computer-readable storage medium or transmitted from one computer-readable storage medium to another computer-readable storage medium. For example, the computer instructions may be transmitted from one Web site, computer, server, or data center to another Web site, computer, server, or data center in a wired manner (e.g., a coaxial cable, an optical fiber, a digital subscriber line (DSL)) or in a wireless manner (e.g., infrared, wireless, microwave, etc.). The computer-readable storage medium may be any available medium that a computer can read, or, the computer-readable storage medium may be a data storage device that includes one or more available media integrations, such as a server, a data center, etc. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The foregoing is merely the implementations of the present disclosure, and the protection scope of the present disclosure is not limited thereto. Variation and substitution which can be readily thought by those skilled in the art within the technical scope disclosed in the present disclosure should fall within the protection scope of the present disclosure. Therefore, the protection scope of this present disclosure should be subject to the protection scope of the claims.

## Claims

1. A communication method, comprising:
receiving, by a first terminal device, first information from a second terminal device, the first information comprising an application layer identification and/or a link layer identification of a third terminal device; and
determining, by the first terminal device, based on the first information, a communication link between the first terminal device and the third terminal device, the communication link being used to provide a communication relay between the second terminal device and the third terminal device.

2. The method of claim 1, wherein the link layer identification is a layer 2 identification used for proximity-based services (ProSe) communication.

3. The method of claim 1 or 2, wherein the first terminal device has a proximity-based services (ProSe) capability.

4. The method of any one of claims 1 to 3, wherein receiving, by the first terminal device, the first information from the second terminal device comprises:
receiving, by the first terminal device, the first information from the second terminal device through a first direct communication request message or during security information interaction.

5. The method of claim 4, wherein the first direct communication request message comprises at least one of: an application layer identification of the second terminal device, an identification of the first terminal device, service information or a relay service code.

6. The method of any one of claims 1 to 5, wherein determining, by the first terminal device, based on the first information, the communication link between the first terminal device and the third terminal device comprises:
sending, by the first terminal device, based on the first information, second information to the third terminal device in a unicast manner, the second information being used to request to establish the communication link.

7. The method of claim 6, wherein sending, by the first terminal device, based on the first information, the second information to the third terminal device in the unicast manner comprises:
sending, by the first terminal device, the second information to the third terminal device in the unicast manner through a second direct communication request message.

8. The method of claim 6, wherein sending, by the first terminal device, based on the first information, the second information to the third terminal device in the unicast manner comprises:
sending, by the first terminal device, the second information in the unicast manner by using the link layer identification of the third terminal device as a target link layer identification.

9. The method of any one of claims 6 to 8, further comprising:
sending, by the first terminal device, an Internet Protocol (IP) address of the second terminal device to the third terminal device through the second information or during security information interaction.

10. The method of any one of claims 6 to 9, wherein the second information comprises at least one of: an identification of the first terminal device, the application layer identification of the third terminal device, service information or a relay service code.

11. The method of any one of claims 1 to 5, wherein determining, by the first terminal device, based on the first information, the communication link between the first terminal device and the third terminal device comprises:
determining, by the first terminal device, based on the first information, that the communication link between the first terminal device and the third terminal device has existed.

12. The method of claim 11, further comprising:
after determining, by the first terminal device, based on the first information, that the communication link between the first terminal device and the third terminal device has existed, sending, by the first terminal device, third information to the third terminal device, the third information being used to modify the communication link.

13. The method of claim 11 or 12, further comprising:
sending, by the first terminal device, an Internet Protocol (IP) address of the second terminal device to the third terminal device through third information or during security information interaction.

14. The method of claim 12, wherein sending, by the first terminal device, the third information to the third terminal device comprises:
sending, by the first terminal device, the third information to the third terminal device through a first link modification request message.

15. The method of claim 12 or 14, wherein the third information comprises at least one of: an identification of the first terminal device, the application layer identification of the third terminal device, service information or a relay service code.

16. The method of any one of claims 1 to 15, further comprising:
after receiving, by the first terminal device, the first information from the second terminal device, sending, by the first terminal device, fourth information to the second terminal device, the fourth information comprising an Internet Protocol (IP) address of the third terminal device.

17. The method of claim 16, wherein sending, by the first terminal device, the fourth information to the second terminal device comprises:
sending, by the first terminal device, the fourth information to the second terminal device through a direct communication response message or a second link modification request message.

18. A communication method, comprising:
sending, by a second terminal device, first information to a first terminal device, the first information comprising an application layer identification and/or a link layer identification of a third terminal device.

19. The method of claim 18, wherein the link layer identification is a layer 2 identification used for proximity-based services (ProSe) communication.

20. The method of claim 18 or 19, wherein the second terminal device has a proximity-based services (Prose) capability.

21. The method of any one of claims 18 to 20, wherein sending, by the second terminal device, the first information to the first terminal device comprises:
sending, by the second terminal device, the first information through a first direct communication request message or during security information interaction.

22. The method of claim 21, wherein the first direct communication request message comprises at least one of: an application layer identification of the second terminal device, an identification of the first terminal device, service information or a relay service code.

23. The method of any one of claims 18 to 22, further comprising:
after sending, by the second terminal device, the first information to the first terminal device, receiving, by the second terminal device, fourth information from the first terminal device, the fourth information comprising an Internet Protocol (IP) address of the third terminal device.

24. The method of claim 23, wherein receiving, by the second terminal device, the fourth information from the first terminal device comprises:
receiving, by the second terminal device, the fourth information from the first terminal device through a direct communication response message or a second link modification request message.

25. A communication method, comprising:
receiving, by a third terminal device, unicast signaling from a first terminal device, the unicast signaling being used to determine a communication link between the first terminal device and the third terminal device.

26. The method of claim 25, wherein receiving, by the third terminal device, the unicast signaling from the first terminal device comprises:
receiving, by the third terminal device, second information sent by the first terminal device in a unicast manner, the second information being used to request to establish the communication link between the first terminal device and the third terminal device.

27. The method of claim 25, wherein receiving, by the third terminal device, the unicast signaling from the first terminal device comprises:
receiving, by the third terminal device, third information from the first terminal device, the third information being used to modify the communication link between the first terminal device and the third terminal device.

28. The method of claim 26, wherein receiving, by the third terminal device, the second information sent by the first terminal device in the unicast manner comprises:
receiving, by the third terminal device, the second information sent by the first terminal device in the unicast manner through a second direct communication request message.

29. The method of claim 26 or 28, wherein the second information comprises at least one of: an identification of the first terminal device, an application layer identification of the third terminal device, service information or a relay service code.

30. The method of claim 27, wherein receiving, by the third terminal device, the third information from the first terminal device comprises:
receiving, by the third terminal device, the third information from the first terminal device through a first link modification request message.

31. The method of claim 30, wherein the third information comprises at least one of: an identification of the first terminal device, an application layer identification of the third terminal device, service information or a relay service code.

32. The method of any one of claims 25 to 31, further comprising:
receiving, by the third terminal device, an Internet Protocol (IP) address of a second terminal device from the first terminal device through second information or third information, or during security information interaction.

33. The method of any one of claims 25 to 32, wherein the third terminal device has a proximity-based services (Prose) capability.

34. A communication apparatus, comprising:
a receiving unit, configured to receive first information from a second terminal device, the first information comprising an application layer identification and/or a link layer identification of a third terminal device; and
a determination unit, configured to determine, based on the first information, a communication link between the apparatus and the third terminal device, the communication link being used to provide a communication relay between the second terminal device and the third terminal device.

35. The apparatus of claim 34, wherein the link layer identification is a layer 2 identification used for proximity-based services (ProSe) communication.

36. The apparatus of claim 34 or 35, wherein the apparatus has a proximity-based services (ProSe) capability.

37. The apparatus of any one of claims 34 to 36, wherein the receiving unit is specifically configured to receive the first information from the second terminal device through a first direct communication request message or during security information interaction.

38. The apparatus of claim 37, wherein the first direct communication request message comprises at least one of: an application layer identification of the second terminal device, an identification of the apparatus, service information or a relay service code.

39. The apparatus of any one of claims 34 to 38, wherein the determination unit is specifically configured to send, based on the first information, second information to the third terminal device in a unicast manner, the second information being used to request to establish the communication link between the apparatus and the third terminal device.

40. The apparatus of claim 39, wherein the determination unit is specifically configured to send the second information to the third terminal device in the unicast manner through a second direct communication request message.

41. The apparatus of claim 39, wherein the determination unit is specifically configured to: send the second information in the unicast manner by using the link layer identification of the third terminal device as a target link layer identification.

42. The apparatus of any one of claims 39 to 41, wherein the determination unit is further configured to send an Internet Protocol (IP) address of the second terminal device to the third terminal device through the second information or during security information interaction.

43. The apparatus of any one of claims 39 to 42, wherein the second information comprises at least one of: an identification of the apparatus, the application layer identification of the third terminal device, service information or a relay service code.

44. The apparatus of any one of claims 34 to 39, wherein the determination unit is specifically configured to determine, based on the first information, that the communication link between the apparatus and the third terminal device has existed.

45. The apparatus of claim 44, further comprising:
a sending unit, configured to send third information to the third terminal device, the third information being used to modify the communication link.

46. The apparatus of claim 44 or 45, wherein the sending unit is further configured to send an Internet Protocol (IP) address of the second terminal device to the third terminal device through third information or during security information interaction.

47. The apparatus of claim 45, wherein the sending unit is specifically configured to send the third information to the third terminal device through a first link modification request message.

48. The apparatus of claim 45 or 47, wherein the third information comprises at least one of: an identification of the apparatus, the application layer identification of the third terminal device, service information or a relay service code.

49. The apparatus of any one of claims 34 to 48, wherein the sending unit is further configured to send fourth information to the second terminal device, the fourth information comprising an Internet Protocol (IP) address of the third terminal device.

50. The apparatus of claim 49, wherein the sending unit is specifically configured to send the fourth information to the second terminal device through a direct communication response message or a second link modification request message.

51. A communication apparatus, comprising:
a sending unit, configured to send first information to a first terminal device, the first information comprising an application layer identification and/or a link layer identification of a third terminal device.

52. The apparatus of claim 49, wherein the link layer identification is a layer 2 identification used for proximity-based services (ProSe) communication.

53. The apparatus of claim 49 or 50, wherein the apparatus has a proximity-based services (Prose) capability.

54. The apparatus of any one of claims 49 to 51, wherein the sending unit is specifically configured to send the first information through a first direct communication request message or during security information interaction.

55. The apparatus of claim 52, wherein the first direct communication request message comprises at least one of: an application layer identification of the apparatus, an identification of the first terminal device, service information or a relay service code.

56. The apparatus of any one of claims 49 to 53, further comprising:
a receiving unit, configured to receive fourth information from the first terminal device, the fourth information comprising an Internet Protocol (IP) address of the third terminal device.

57. The apparatus of claim 54, wherein the receiving unit is specifically configured to receive the fourth information from the first terminal device through a direct communication response message or a second link modification request message.

58. A communication apparatus, comprising:
a receiving unit, configured to receive unicast signaling from a first terminal device, the unicast signaling being used to determine a communication link between the first terminal device and the apparatus.

59. The apparatus of claim 58, wherein the receiving unit is specifically configured to receive second information sent by the first terminal device in a unicast manner, the second information being used to request to establish the communication link between the first terminal device and the apparatus.

60. The apparatus of claim 58, wherein the receiving unit is specifically configured to receive third information from the first terminal device, the third information being used to modify the communication link between the first terminal device and the apparatus.

61. The apparatus of claim 59, wherein the receiving unit is specifically configured to receive the second information sent by the first terminal device in the unicast manner through a second direct communication request message.

62. The apparatus according to claim 59 or 61, wherein the second information comprises at least one of: an identification of the first terminal device, an application layer identification of the apparatus, service information or a relay service code.

63. The apparatus of claim 60, wherein the receiving unit is specifically configured to receive the third information from the first terminal device through a first link modification request message.

64. The apparatus of claim 63, wherein the third information comprises at least one of: an identification of the first terminal device, an application layer identification of the apparatus, service information or a relay service code.

65. The apparatus of any one of claims 58 to 64, wherein the receiving unit is further configured to receive an Internet Protocol (IP) address of a second terminal device from the first terminal device through second information or third information, or during security information interaction.

66. The apparatus of any one of claims 58 to 65, wherein the apparatus has a proximity-based services (Prose) capability.

67. A communication apparatus, comprising a memory and a processor, wherein the memory is configured to store a program, and the processor is configured to call and run the program in the memory to implement the method of any one of claims 1 to 33.

68. A communication apparatus, a processor, wherein the processor is configured to call and run a program from a memory to implement the method of any one of claims 1 to 33.

69. A chip, comprising a processor, wherein the processor is configured to call and run a program from a memory, to enable a device installed with the chip to implement the method of any one of claims 1 to 33.

70. A computer-readable storage medium having stored thereon a program that, when executed by a computer, enables the computer to implement the method of any one of claims 1-33.

71. A computer program product, comprising a program that enables a computer to implement the method of any one of claims 1-33.

72. A computer program, enabling a computer to implement the method of any one of claims 1-33.
